(19) Europäisches Patentamt
European Patent Office
Office européen des brevets

(11) **EP 2 200 232 A1**

(12) **EUROPEAN PATENT APPLICATION**

(43) Date of publication:
**23.06.2010 Bulletin 2010/25**

(51) Int Cl.:
***H04L 12/56*** (2006.01)

(21) Application number: **09179223.4**

(22) Date of filing: **15.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **18.12.2008 ES 200803605**

(71) Applicants:
• **Vodafone Group PLC**
**Newbury**
**Berkshire RG14 2FN (GB)**
• **Vodafone España, S.A.U.**
**28108 Alcobendas, Madrid (ES)**
Designated Contracting States:
**ES**

(72) Inventors:
• **Garriga Muñiz, Beatriz**
**E-28050, Madrid (ES)**
• **Perez de la Rosa, Jose Angel**
**E-28050, Madrid (ES)**
• **Zas Couce, Luis**
**E-28050, Madrid (ES)**

(74) Representative: **Keston, David Arthur**
**Vodafone Group Services Ltd.**
**Group Legal (Patents)**
**Vodafone House**
**The Connection**
**Newbury**
**Berkshire RG14 2FN (GB)**

(54) **Method of bandwidth management in packet networks**

(57) A method of managing a connection between a first access point node (122,222,322) and a second access point node (121,221,321) said connection travelling through a packet-based network (110,310) comprising a plurality of intermediate aggregation nodes (101,102,103,104,105,106,107), the method comprising the steps of, at the first access point node: for each of a plurality, M, of types of traffic identified by a respective traffic code, sending for a certain period of time T, a plurality of respective IP packets to the second access point node; for each of said IP packets received at said second access point node, receiving from said second access point node a respective IP packet in reply to said previously received IP packet, and calculating the total delay suffered by each pair of IP packets. The method also comprises the steps of: for each of the M types of traffic, selecting the minimum delay of said calculated delays; for each of said M types of traffic, calculating an average delay; storing said M minimum delay measurements and said M average delay measurements; for each of said M types of traffic, making a decision on whether to refuse said connection based on said stored M minimum delay measurements and said M average delay measurements.

FIG. 1

EP 2 200 232 A1

**Description**

FIELD OF THE INVENTION

The present invention relates to bandwidth management in IP networks.

STATE OF THE ART

A possible evolution for operators of mobile telecommunications networks is to provide enhanced indoor 3G coverage at the end customer's home or office, with the possibility to offer different services (both voice and data) through the 3G coverage by using the existing DSL (Digital Subscriber Loop) line.

One of the most difficult aspects to be implemented in an end-to-end system including an IP network is how to calculate the bandwidth (BW) available in such IP network when there are incoming calls. Based on the available bandwidth, an access point (AP) shall be able to determine whether a specific incoming request is admitted or rejected. This means that, if there is lack of bandwidth (BW), delay sensitive connections must be rejected, while non-delay sensitive traffic could be accepted and processed following the quality-of-service (QoS) strategy applied by the network operators.

European patent application EP-1919229-A2 discloses a method and apparatus for managing bandwidth of video and data over DSL. In this disclosure, a buffer responsible for managing the local bandwidth associated to a specific customer or user is disclosed. The disclosed apparatus for managing bandwidth refers to congestion in the twisted pair copper wires that connect the individual subscriber residence to the DSLAM or first access point from subscriber, but not to the central nodes that distribute contents.

Similarly, US2007/0127489-A1 discloses an apparatus and method for optimizing the utilization and delivery of multiple applications over a Digital Subscriber Loop. Again, this document does not refer to the congestion in the external IP network.

Unfortunately, currently there are no accurate mechanisms which allow the calculation of the bandwidth available in relation to the external IP network (as opposed to the available bandwidth from subscriber to access point), since in packet-based systems there are very rapid fluctuations which might provoke a strong impact on the QoS strategy.

Therefore, there is a need to provide a mechanism of solving congestion problems in such IP networks.

SUMMARY OF THE INVENTION

The present invention is intended to address the above mentioned need by means of a mechanism based on packet delays for both downlink and uplink.

In a first aspect of the present invention there is provided a method of managing a connection between a first access point node and a second access point node said connection travelling through a packet-based network comprising a plurality of intermediate aggregation nodes. The method comprises the steps of, at the first access point node: for each of a plurality of M types of traffic identified by a respective traffic code, sending for a certain period of time T, a plurality of respective IP packets to the second access point node; for each of said IP packets received at said second access point node, receiving from said second access point node a respective IP packet in reply to said previously received IP packet and calculating the total delay suffered by each pair of IP packets.

The method may further comprise: for each of the M types of traffic, selecting the minimum delay of said calculated delays; for each of said M types of traffic, calculating an average delay; storing said M minimum delay measurements and said M average delay measurements; for each of said M types of traffic, making a decision on whether to refuse said connection based on said stored M minimum delay measurements and said M average delay measurements.

In a particular embodiment, if said requested connection requires delay-sensitive traffic, said decision is made as follows: if said average delay stored for a certain type of traffic is higher than or equal to a certain threshold or if said minimum delay for said certain type of traffic is higher than said certain threshold, then said connection is refused.

In another particular embodiment, if said connection requires non-delay-sensitive traffic, said decision is made as follows: if said average delay stored for a certain type of traffic is higher than or equal to a certain threshold, then said connection is refused.

The bandwidth allocated if said connection is accepted is preferably calculated according to the following formula:

$$BW = Peak\_Rate * \left[ \frac{Min\_delay_i}{Av\_Delay_i} \right]$$

wherein $BW$ denotes the total bandwidth available at said first access point node in Kbps, i denotes a given traffic code and Peak rate denotes the maximum BW achievable in the link for any traffic type between said first access point node and said second access point node.

The average delay is preferably calculated according to the following expression:

$$Av\_Delay_i = \frac{\sum_{j=N...N-z+1}[delay_i[j]]}{z}$$

wherein N denotes the number of measurements associated to traffic code i taken within said certain period of time T and z denotes the number of measurements taken within a period of time, z being allowed to take any natural value between 1 and N. In a particular embodiment, the z measurements are the z most recent measurements.

The step of repeatedly sending a respective IP packet from said access point node to said destination node preferably comprises repeatedly sending a ping message. Conveniently, the step of calculating the delay suffered by each of the IP packets sent by said destination node in reply to a previously received respective IP packet may comprise sending a reply message to each of said ping messages. More preferably, said ping message is an ICMP echo request message and said reply message is an ICMP echo reply message.

Preferably, the method also comprises, at said second access point node: sending for said certain period of time T, a plurality of respective IP packets to said first access point node; for each of said IP packets received from said second access point node at said first access point node, receiving a respective IP packet in reply to said previously received IP packet, and calculating the total delay suffered by each pair of IP packets; for each of the M types of traffic, selecting the minimum delay of said calculated delays; for each of said M types of traffic, calculating an average delay; storing said M minimum delay measurements and said M average delay measurements; for each of said M types of traffic, making a decision on whether to refuse said connection based on said stored M minimum delay measurements and said M average delay measurements.

In a further aspect of the present invention there is provided an access point node comprising means for carrying out the above-mentioned method. This access point node is preferably configured for providing 3G coverage at an end customer's home by using existing DSL lines.

In a further aspect of the present invention there is provided a system comprising the access point node previously mentioned, and further comprising a packet-based network to which said access point node is connected, and a mobile communications network to which said packet-based network is connected.

In a final aspect of the present invention there is provided a computer program comprising computer program code means adapted to perform the steps of the method previously mentioned when said program is run on a computer, a digital signal processor, a field-programmable gate array, an application-specific integrated circuit, a micro-processor, a micro-controller, or any other form of programmable hardware.

The advantages of the proposed invention will become apparent in the description that follows.

BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but rather as an example of how the invention can be embodied. The drawings comprise the following figures:

Figure 1 shows a schematic representation of the network architecture according to the present invention.

Figure 2 shows a schematic representation of the flow control between two access point nodes according to an embodiment of the present invention.

Figure 3 shows an exemplary scenario of application of the present invention.

DESCRIPTION OF PREFERRED EMBODIMENTS OF THE INVENTION

The implementation of the present invention can be carried out as follows:

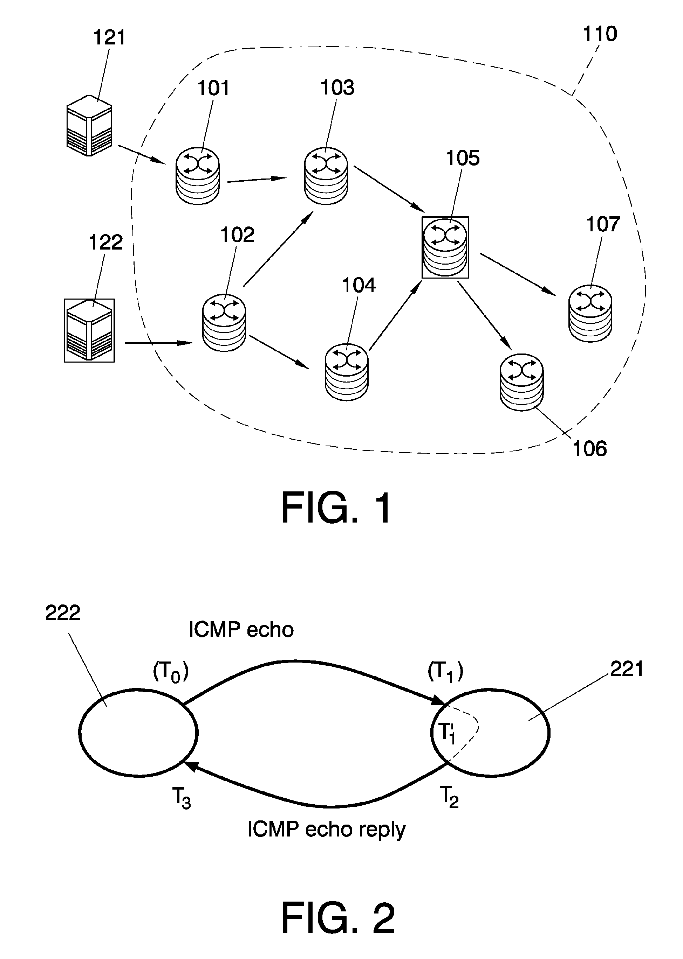

Figure 1 shows a schematic representation of a packet-based network 110, such as an IP network architecture, to which the invention is applicable. It comprises a plurality of intermediate aggregation nodes (IAN) 101 102 103 104 105 106 107. Figure 1 also shows several access point nodes 121 122 configured for connecting the IP network 110 to any other network. Preferably, the method of the invention is applicable in the event of semi-permanent virtual connections (IP-based) rather than in scenarios based on switching virtual connections. This is due to the fact that, in switched communications, each packet may follow a different path, as a consequence of which the arrival times of each of the packets are also different.

In a particular embodiment, these access point nodes 121 122 are customer premises equipments (CPE), that is to say, telecommunications equipments used both indoor and outdoor for originating, routing and ending a communication. Non-limiting examples of CPEs are: routers, internet access devices (IADs), set top boxes (STBs), telephone terminals and fax machines. They are terminal units associated to telecommunications equipment, located at the subscriber's side and which are connected to the communications channel of the information (data, voice, video) provider or bearer. The CPE provides the equipment to which it is connected an IP address, either static or dynamic, depending on the Internet services provider.

The method of the invention seeks to allow to detect end to end congestion situations between two different equipments due to the rapid traffic fluctuations in packet-based systems and therefore to react accordingly. The method is explained next in relation to figure 2, which shows a schematic representation of the flow control between a first access point node 222 (similar to 121 122 in figure 1) and a second access point node 221 (similar to 121 122 in figure 1) selected as destination node. In this particular example, the selected access point node which manages the mechanism is access point 222, while the node selected as destination node to measure the bandwidth is access point 221.

First, the first access point (AP) customer premises equipment (CPE) 222 periodically triggers a ping (ICMP packets, wherein ICMP stands for Internet Control Message Protocol, defined in RFC 792), based on the number of DSCP codes (wherein DSCP stands form Differentiated Services Code Point, defined in RFC 2474). RFC 2474 defines M=16 different DSCP codes representing 16 types of traffic. Non-limiting examples of different types of traffic having different priorities represented by respective different DSCP codes are: EF (expedited forwarding), which refers to voice traffic and signalling; AF1 (assured forwarding), which refers to streaming traffic; AF2, which refers to interactive traffic (minimum guaranteed BW); and BE (best effort), which refers to pure best effort traffic. As apparent to those skilled in the art, some of these M types of traffic are delay-sensitive and some others are non-delay sensitive.

This ping targets to the IP address configured by the operating company. This means that each ping is sent to a specific IP address, which is the one at which the traffic arrives (in this case, the IP address of the destination access point 221).

Preferably, the ping targets to a destination access point which is an access point (AP) aggregator. In order for the ping to reach the destination access point 221, it may pass through one or more intermediate aggregation nodes 101 102... 107.

This ping consists in sending echo request messages ICMP and receiving echo reply messages for determining whether a node or host is available or not, for determining the time needed by a packet for fetching that node or host and for determining the amount of hosts through which each packet travels.

The ping size must be the same for all DSCP codes. Preferably, the ping size is chosen to be 1 Byte in order for this size not to impact on the time measurements. Preferably, access point node 222 sequentially sends a ping for each of the M DSCP codes and, once it has finished sending this plurality of pings, starts again sending a ping for each of the M DSCP codes. In other words, the pings are periodically and continuously sent in order to measure the congestion conditions within the link between the originating access point node 222 and the destination access point node 221.

As shown in figure 2, the originating access point 222 sends an ICMP echo message towards the destination access point 221. The destination node 221 sends back an ICMP echo reply message to the originating access point 222. As illustrated in figure 2, a timer To starts counting (from 0) when the ICMP echo message leaves the access point 222 and it is set up to 0 again when the corresponding ICMP echo reply message is received at the access point 222. Once the originating access point 222 detects the arrival of that ICMP echo reply message, it sends another ICMP echo message. The originating access point 222 sends that subsequent ICMP echo message at a time instant defined in another timer which defines the periodicity of the pings.

$T_1$ denotes the time spent by the ICMP echo message to get from the originating access point node 222 to the remote site (destination access point node 221), taking into account any internal delays.

$T_1'$ denotes an internal processing timer at the destination access point node 221 and refers to the time spent by the destination node 221 in receiving and processing the packet. $T_2$ indicates the time spent by the ICMP echo reply message to travel from the destination access point node 221 to the originating access point node 222. Finally, $T_3$ denotes the round trip delay or total time. In other words, $T_3$ is the time that passes from the moment an ICMP echo message leaves the originating access point node 222 until the moment its corresponding ICMP echo reply message (in reply to that ICMP echo message) reaches that originating access point node 222. This $T_3$ includes internal processing delays both at the originating access point 222 and at the destination access point node 221.

These delay measurements are performed periodically. The period is defined by a configurable timer, configured according to the needs of the network operator. It is the originating access point node 222 the one which performs the delay measurements ($T_3$) for a ping. In a particular embodiment, the destination access point node 221 also performs such delay measurements. Thus, a mechanism based on packet delays for both uplink and downlink is carried out. In order for both the originating and destination nodes 222 221 to inform each other about their respective situations (calculations of delays, etc.) a communication by means of signalling messages between them is required (such as a proprietary communication).

For each of the pings having different DSCP code triggered by an access point node 222, the access point 222 measures the delays registered in the time stamp in the respective IP packet. The field "time stamp" measures the delay of the packet to which it belongs. The access point 222 then stores those measured and registered time delays in a memory or memory buffer, preferably within the access point 222.

After periodically performing these ping measurements for a certain time period (long enough to measure several (N) delay measurements for each of the M DSCP codes, representing different service priorities), both the originating access point node 222 and the destination access point node 221 store, for each of the different M DSCP codes, the minimum delay $Min\_Delay_i$ measured during that time period T (in which N measurements have been taken per DSCP code) and an average delay measurement per type of traffic (that is to say, per DSCP code) $Av\_Delay_i$. Average delay measurement, $Av\_Delay_i$, is calculated for a subset of the N available samples, where the number of samples in that subset is an integer between 1 and N. As detailed later, the average delay measurement is preferably calculated for a certain number of measurements z per each of the M DSCP codes, that number varying from 1 (in which case the average value in fact depends only on the last measurement) to a number N of measurements (in which case the average delay is calculated over all samples), being the last N measurements per DSCP code. The minimum delay $Min\_Delay_i$ depends on the level of traffic reached on the packet-based networks.

There are clearly many alternative schemes for calculating an average delay measurement, $Av\_Delay_i$, using some or all of the N available samples for each of the M traffic codes. In general, a subset of z' samples selected from the N available samples is used, where z is a natural number between 1 and N. For instance, the z' samples may be selected at random from among the N available samples and averaged in any conventional manner (e.g. summed and then divided by z'). The average may alternatively be calculated using every other sample, (e.g. for even N, z=N/2 samples, selecting only samples {delay_i[1], delay_i[3], delay_i[5] ... delay_i[N-1]}).

Rather than averaging the delay values directly, the calculation of an average delay measurement may comprise the calculation of a mean value of the respective differences between z' delay value measurements and a predetermined standard delay, delay_i[C]: in one instance the respective differences between the z' most recent delay value measurements and the predetermined standard delay may be used:

$$Av\_Delay_i = delay_i[C] + \frac{\sum\limits_{j=N...N-z+1}[(delay_i[j] - delay_i[C])]}{z}$$

As will be apparent to the reader, the term "average delay measurement" is not restricted to the calculation of a strict arithmetic average. The term should also be understood as encompassing conventional alternative techniques for calculating a mean value such as the generation of a weighted average or the calculation of a mean value using a root-mean squared technique.

In these expressions, sub-index $i$ denotes the type of traffic or type of DSCP code ($i$ varying from 1 to 16). These two stored measurements can be mathematically expressed as follows:

$$Min\_Delay_i = Min[delay_i[j]]_{j=1...N}$$

$$Av\_Delay_i = \frac{\sum_{j=N...N-z+1}[delay_i[j]]}{z}$$

wherein Min_$Delay_i$ denotes the minimum delay (ms) measured for a certain DSCP code $i$ (also called CSCP connection identification or different type of traffic) during a certain time period, $Av\_Delay_i$ denotes an average delay measured and stored for a certain DSCP code $i$, N denotes the number of measurements (each of them comprising delays associated to all the DSCP codes) taken in a certain time period T, N thus being a natural number N=1, 2, 3 ..., $j$ varying from 1 to N and $z$ denotes the number of samples in a subset of said N samples considered to calculate the average of delay.

For instance, the average delay may be calculated from the last z samples out of the N samples taken during period T.

z must be configurable in the range of values [1...N].

If N=1 only the last sample delay is taken into account because z also takes a single value z=1. Thus, if N=1 the average value becomes in fact the last value.

Once the minimum delay Min_$Delay_i$ and the average delay measurement per type of traffic $Av\_Delay_i$ are stored, the originating access point CPE 222 and, in a particular embodiment, the destination one 221, calculate the respective bandwidth (BW) available at the originating access point 222 and available at the destination access point node 221.

In a particular implementation, the bandwidth (BW) available at the originating access point node 222 and at the destination access point node 221 is calculated according to the following expression, which varies depending on whether the traffic is delay-sensitive (DS) or non-delay-sensitive (NDS):

a) For delay-sensitive traffic (DS):
If (Av_Delay (DS)$_i$ ≥ X or Min_delay$_i$ > X ) then connection is refused
Else

$$BW = Peak\_Rate * \left[\frac{Min\_delay_i}{Av\_Delay_i}\right] \qquad \text{eq. A}$$

b) For non-delay-sensitive traffic (NDS):
If Av_Delay (NDS)$_i$ ≥ Y then connection is refused
Else

$$BW = Peak\_Rate * \left[\frac{Min\_delay_i}{Av\_Delay_i}\right] \qquad \text{eq. B}$$

Where: $BW$ denotes the total bandwidth available at the originating access point 222 and available at the destination access point node 221 (because the algorithm is implemented in both directions) in Kbps, Peak rate denotes the maximum BW achievable in the link for any traffic type (configurable) between the originating access point node 222 and the destination access point node 221, X denotes a maximum delay (ms) allowed for delay-sensitive traffic and Y denotes a maximum delay (ms) allowed for non-delay-sensitive traffic. i denotes a given traffic code.

Alternatively, instead of refusing the connection in the event that the condition imposed by the "if" is not met, a more complex algorithm can be implemented, in which, for example, that connection is allowed but only after another connection involving traffic of lower priority is refused or released. This applies to both scenarios a) delay-sensitive traffic (DS) and b) non-delay-sensitive traffic (NDS).

In another alternative implementation, instead of differentiating simply between delay-sensitive traffic (DS) and non-delay-sensitive traffic (NDS), the calculation of bandwidth (BW) is done following an algorithm (not described in the present application) which takes into account each of the specific types of traffic (represented by the already described DSCP codes).

Turning back to the particular implementation according to which the method applies the expressions in equations A and B above:

The connection, which is a logical connection, between the originating access point node 222 and the destination node 205 is refused if the average delay (typically derived from the z most recent delay measurements) stored for a certain DSCP code i is higher than or equal to a certain threshold X or if the minimum delay measured within a certain time period is higher than that certain threshold X. It is the network operator that decides and configures the threshold X as a function of the network architecture and/or as a function of the quality-of-service (QoS) strategy.

If the average delay stored for a certain DSCP code $i$ is lower than that threshold X or if the minimum delay measured within a certain time period is lower than or equal to that threshold X, a bandwidth is calculated according to equation A.

For non-delay-sensitive traffic (NDS), which is less strict in terms of delay, the connection between the originating access point node 222 and the destination access point node 221 is refused if the average delay stored for a certain DSCP code $i$ is higher than or equal to a certain threshold Y. Again, it is the network operator that decides and programs the threshold Y as a function of the network architecture and/or as a function of the quality-of-service (QoS) strategy.

In fact, all delays and thresholds are configurable as a function of the network architecture and/or as a function of the quality-of-service (QoS) strategy.

If the last delay stored for a certain DSCP code $i$ is lower than that threshold Y a bandwidth is calculated according to the already mentioned formula.

So far, an embodiment in which the originating access point node 222 takes as many delay measurements as there are types of connections $i$ (based on the DSCP marking) has been described. However, alternatively, all the non-delay-sensitive (NDS) connections could be bundled in one single value in order to simplify the algorithm. This is configurable by the network operator. Similarly, the destination access point node 221 implements the same algorithm, in such a way that it also takes as many delay measurements as type of connections $i$ (based on the DSCP marking). Thus, a mechanism based on packet delays for both uplink and downlink has been described. In order for both the originating and destination nodes 222 221 to inform each other about their respective situations (calculations of delays, etc.) a communication by means of signalling messages between them is required (such as a proprietary communication).

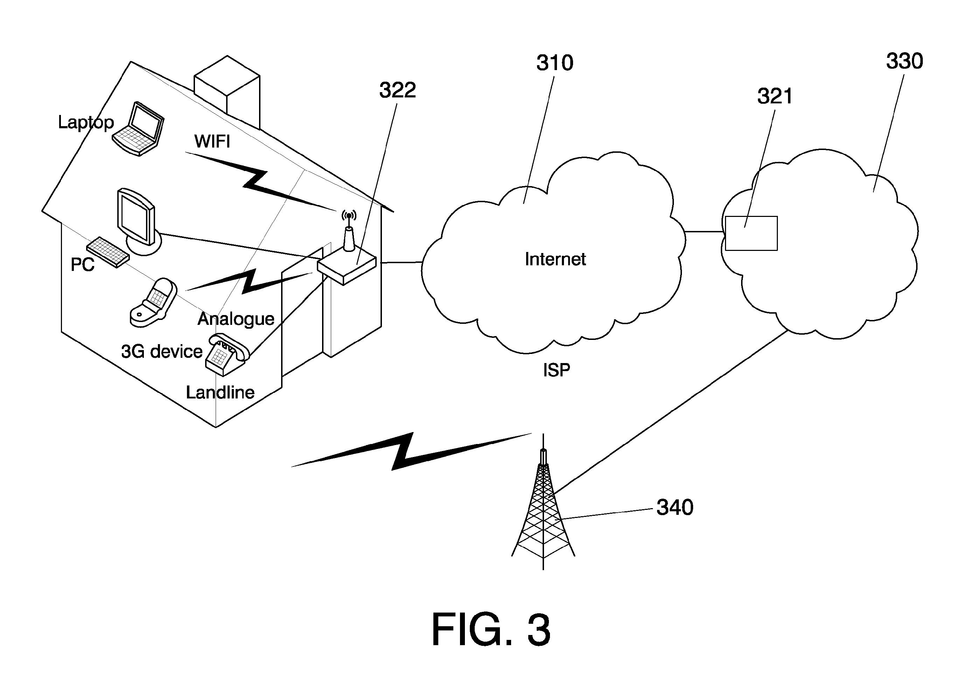

Figure 3 shows a possible application example of the method of the present invention, wherein one of the access point nodes 322 (for example, the originating access point node) is at home. This solution consists of providing enhanced indoor 3G coverage at an end customer's home with the possibility of offering different services (both voice and data) through the 3G coverage by using the existing DSL line. This is achieved by means of an access point node 322, capable of performing the method described in relation to figures 1 and 2. The access point node 322 is connected to a packet-based network 310 managed by an ISP (Internet Service Provider), similar to the one 110 described in connection to figure 1. In turn, the packet-based network 310 is connected to a mobile communications network 330 of a mobile services provider. Node 321 in figure 3 represents a second access point node (such as a destination access point node). The method of the invention can be used not only for the indoor (home) connection of figure 3, but also for network elements, such as BTSs (as illustrated in figure 3 my reference 340), as long as such network elements are IP-based.

In summary, the present invention allows to manage bandwidth in congested packet networks. In particular, mobile services providers are able to provide enhanced indoor 3G coverage and to offer voice and data services through the 3G coverage by using the existing DSL line.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiments described herein, but also encompasses any variations that may be considered by any person skilled in the art (for example, as regards the choice of components, configuration, etc.), within the general scope of the invention as defined in the appended claims.

**Claims**

1.  A method of managing a connection between a first access point node (122, 222, 322) and a second access point node (121, 221, 321) said connection travelling through a packet-based network (110, 310) comprising a plurality of intermediate aggregation nodes (101, 102, 103, 104, 105, 106, 107), the method comprising the steps of, at the first access point node (122, 222, 322):

    - for each ($i$) of a plurality, M, of types of traffic identified by a respective traffic code, sending for a certain period of time T, a plurality of respective IP packets to the second access point node (121, 221, 321);
    - for each of said IP packets received at said second access point node (121, 221, 321), receiving from said second access point node (121, 221, 321) a respective IP packet in reply to said previously received IP packet, and calculating the total delay suffered by each pair of IP packets;

    the method being **characterised by** the steps of:

    - for each ($i$) of the M types of traffic, selecting the minimum delay (Min_$Delay_i$) of said calculated delays;
    - for each ($i$) of said M types of traffic, calculating an average delay ($Av\_Delay_i$);
    - storing said M minimum delay measurements (Min_$Delay_i$) and said M average delay measurements ($Av\_Delay_i$);
    - for each ($i$) of said M types of traffic, making a decision on whether to refuse said connection based on said stored M minimum delay measurements (Min_$Delay_i$) and said M average delay measurements ($Av\_Delay_i$).

2.  The method according to claim 1 wherein, if said requested connection requires delay-sensitive traffic, said decision is made as follows:

    - if said average delay ($Av\_Delay_i$) stored for a certain type of traffic ($i$) is higher than or equal to a certain threshold (X) or if said minimum delay (Min_$Delay_i$) for said certain type of traffic ($i$) is higher than said certain threshold (X), then said connection is refused.

3.  The method according to claim 1 wherein, if said connection requires non-delay-sensitive traffic, said decision is made as follows:

    - if said average delay ($Av\_Delay_i$) stored for a certain type of traffic ($i$) is higher than or equal to a certain threshold (Y), then said connection is refused.

4.  The method according to either claim 2 or 3, wherein the bandwidth allocated if said connection is accepted is calculated according to the following formula:

$$BW = Peak\_Rate * \left[ \frac{Min\_delay_i}{Av\_Delay_i} \right]$$

    wherein *BW* denotes the total bandwidth available at said first access point node (122, 222, 322) in Kbps, i denotes a given type of traffic and *Peak_rate* denotes the maximum BW achievable in the link for any traffic type between said first access point node (122, 222, 322) and said second access point node (121, 221, 321).

5.  The method according to any preceding claim, wherein said average delay ($Av\_Delay_i$) is calculated according to the following expression:

$$Av\_Delay_i = \frac{\sum\limits_{j=N...N-z+1} \left[ delay_i[j] \right]}{z}$$

wherein N denotes the number of measurements associated to traffic code *i* taken within said certain period of time T and *z* denotes the last measurements taken within a period of time, z being allowed to take any natural value between 1 and N.

6. The method according to any preceding claim, wherein the step of repeatedly sending a respective IP packet from said first access point node (122, 222, 322) to said second access point node (105, 205) comprises repeatedly sending a ping message.

7. The method according to claim 6, wherein the step of calculating the delay suffered by each of the IP packets sent by said second access point node (105, 205) in reply to a previously received respective IP packet comprises sending a reply message to each of said ping messages.

8. The method according to either claim 6 or 7, wherein said ping message is an ICMP echo request message.

9. The method according to either claim 7 or 8, wherein said reply message is an ICMP echo reply message.

10. The method according to any preceding claim, further comprising, at said second access point node (121, 221, 321):

   - sending for said certain period of time T, a plurality of respective IP packets to said first access point node (122, 222, 322);
   - for each of said IP packets received from said second access point node (121, 221, 321) at said first access point node (122, 222, 322), receiving a respective IP packet in reply to said previously received IP packet, and calculating the total delay suffered by each pair of IP packets;
   - for each (*i*) of the M types of traffic, selecting the minimum delay (Min_$Delay_i$) of said calculated delays;
   - for each (*i*) of said M types of traffic, calculating an average delay (Av_$Delay_i$);
   - storing said M minimum delay measurements (Min_$Delay_i$) and said M average delay measurements (Av_$Delay_i$);
   - for each (*i*) of said M types of traffic, making a decision on whether to refuse said connection based on said stored M minimum delay measurements (Min_$Delay_i$) and said M average delay measurements (Av_$Delay_i$).

11. An access point node (122, 222, 322) connected to a packet-based network (110, 310), the access point node (122, 222, 322) comprising means for carrying out the method of any preceding claim.

12. The access point node (322) according to claim 11, said access point node (322) being configured for providing 3G coverage at an end customer's home by using existing DSL lines.

13. A system comprising the access point node (322) according to claim 12, and further comprising a packet-based network (310) to which said access point node (322) is connected, and a mobile communications network (330) to which said packet-based network (310) is connected.

14. A computer program comprising computer program code means adapted to perform the steps of the method according to any claims from 1 to 10 when said program is run on a computer, a digital signal processor, a field-programmable gate array, an application-specific integrated circuit, a micro-processor, a micro-controller, or any other form of programmable hardware.

# FIG. 1

# FIG. 2

FIG. 3

EP 2 200 232 A1

Europäisches
Patentamt

European
Patent Office

Office européen
des brevets

# EUROPEAN SEARCH REPORT

Application Number

EP 09 17 9223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/058792 A1 (SHAO HUAI-RONG [CN] ET AL) 27 March 2003 (2003-03-27)<br>* abstract *<br>* paragraph [0001] - paragraph [0005] *<br>* paragraph [0016] *<br>* paragraph [0023] - paragraph [0031] *<br>* paragraph [0036] - paragraph [0037] *<br>* claims 1,3-7,14,19 *<br>* figures 2-8 *<br>----- | 1-14 | INV.<br>H04L12/56 |
| X | EP 1 508 996 A2 (SIEMENS AG [DE]) 23 February 2005 (2005-02-23)<br>* abstract *<br>* paragraph [0001] *<br>* paragraph [0005] - paragraph [0007] *<br>* paragraph [0009] - paragraph [0013] *<br>* paragraph [0017] *<br>* paragraph [0020] *<br>* paragraph [0023] *<br>* claims 1-10 *<br>* figure 1 *<br>----- | 1-14 | |
| A | WARREN MATTHEWS ET AL: "The PingER Project: Active Internet Performance Monitoring for the HENP Community"<br>IEEE COMMUNICATIONS MAGAZINE, IEEE SERVICE CENTER, PISCATAWAY, US,<br>vol. 38, no. 5, 1 May 2000 (2000-05-01), pages 130-136, XP011091288<br>ISSN: 0163-6804<br>* abstract *<br>* page 130, column 1, line 1 - page 131, column 1, line 29 *<br>* page 132, column 2, line 59 - page 133, column 1, line 10 *<br>* page 133, column 1, paragraph 52 - page 134, column 1, paragraph 2 *<br>-----<br>                              -/-- | 1-14 | TECHNICAL FIELDS SEARCHED (IPC)<br><br>H04L |

The present search report has been drawn up for all claims

| Place of search | Date of completion of the search | Examiner |
|---|---|---|
| Munich | 22 January 2010 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 09 17 9223

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 335 525 A2 (MICROSOFT CORP [US]) 13 August 2003 (2003-08-13) * abstract * * paragraph [0001] * * paragraph [0005] - paragraph [0014] * * paragraph [0033] - paragraph [0034] * * claims 1,12-15 * * figure 1 * ----- | 1-14 | |
| | | | TECHNICAL FIELDS SEARCHED (IPC) |

The present search report has been drawn up for all claims

| Place of search | Date of completion of the search | Examiner |
|---|---|---|
| Munich | 22 January 2010 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        .............................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 17 9223

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2010

| Patent document cited in search report | | Publication date | Patent family member(s) | | Publication date |
|---|---|---|---|---|---|
| US 2003058792 | A1 | 27-03-2003 | NONE | | |
| EP 1508996 | A2 | 23-02-2005 | DE | 10338495 A1 | 24-03-2005 |
| EP 1335525 | A2 | 13-08-2003 | DE | 60317588 T2 | 23-10-2008 |
| | | | JP | 4233884 B2 | 04-03-2009 |
| | | | JP | 2003249960 A | 05-09-2003 |
| | | | US | 2003152034 A1 | 14-08-2003 |
| | | | US | 2006209701 A1 | 21-09-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1919229 A2

- US 20070127489 A1